# EUROPEAN PATENT APPLICATION

(11) **EP 1 316 672 A1**
(43) Date of publication of application: **04.06.2003**
(21) Application number: 02258003.9
(22) Date of filing: 20.11.2002
(51) Int. Cl.: E21B 33/035

(54) **Power supply means for underwater hydrocarbon production systems**

(30) Priority: 03.12.2001 GB 0128924
(71) Applicant: ABB Offshore Systems Limited, Bristol BS48 1BS (GB)
(72) Inventor: Baggs, Christopher David, Weston-Super-Marem Somerset BS23 2QU (GB); Powell, Steven Robert, Warmley, Bristol BS30 8BQ (GB); Wilson, James Brian, Nailsea, North Somerset BS48 4GB (GB)
(74) Representative: Newstead, Michael John

(57) **Abstract**

An underwater hydrocarbon production system comprises power supply means (1,3,4) at or for use at a remotely located station (2) for providing DC; electrical means (6) at or for location underwater for using DC to provide power for an underwater device; and transmission cabling (5) for transmitting DC from the power supply means to the electrical means.

## Description

The present invention relates to underwater hydrocarbon production systems.

UK Patent No. 2 332 220 describes an underwater hydrocarbon production system in which the need for a hydraulic power source is rendered unnecessary since the power source described is high voltageAC electric power fed from the surface or from a land base via an electric umbilical to a well tree or to a plurality of trees via an underwater distribution unit. However, when the umbilical is very long, for example typically in excess of 35km, the losses (with an AC system typically at a frequency of 50 Hz) become highly significant. This is due to the unwanted reactive AC current flow I_{c} through the capacitance of the cable (as opposed to the wanted current flow I_{L} through the load at the well) which results in I_{c}²R losses in the resistance of the conductor of the cable. As a typical example, if the transmission distance is 200km, then an input power of 10MW may be required to achieve a 1MW supply to the loads at the well tree(s), resulting in a loss, heating the environment, of 9MW i.e. 90% of the transmitted power. Furthermore, the alternating electrical peak voltage (pressure) stresses the insulation of the cable, which substantially reduces its life.

Such distribution systems utilise high voltages, typically in excess of 1000 V, in order to reduce the load current flow for a given power requirement, and thus the I_{L}²R losses due to the load. As a consequence, as described in the above patent, transformers are required at the receiving end of the umbilical to reduce the voltage to a level that is practical for such devices as electric motors fitted in the well or downhole. Unfortunately, the high voltage also proportionally increases the capacitive currents and thus these I_{c}²R losses as well.

US Patent No. 6,045,333 describes a system for controlling a pump for use in a wellbore, in which the pump is driven by DC power converted from an AC power source. The AC to DC power converting circuitry is located in the vicinity of the wellbore, and so the problem of losses caused by a potentially long AC power line between the AC power source and the converting circuitry remains.

According to the present invention, there is provided an underwater hydrocarbon production system comprising:
power supply means at or for use at a remotely located station for providing DC; electrical means at or for location underwater for using the DC to provide power for an underwater device; and
transmission cabling for transmitting the DC from the power supply means to the electrical means.

The power supply means may comprise an AC power source and means for converting AC from the power source to DC. There may be a transformer between the AC power source and the means for converting AC from the power source to DC.

The electrical means could include means for converting DC from the cabling to lower voltage DC for use as power for an underwater device. In this case, the electrical means could further include means for converting such lower voltage DC to AC for use as power for an underwater device.

The electrical means could include means for converting DC from the cabling to lower voltage AC for use as power for an underwater device.

The electrical means could include means for deriving unconverted DC from the cabling for use as power for an underwater device.

The electrical means could be adapted for providing power for a plurality of underwater devices.

There could be a plurality of such electrical means at or for use at different underwater locations, the system including means for distributing DC from the cabling to respective ones of the electrical means.

By the use of DC, the problem of I_{c}² R losses disappears. Furthermore, due to the reduced stress on insulation of the cabling, the supply voltage can be increased, with suitably designed cabling, by as much as a multiple of 6 for the same cabling life, or increased by a multiple of less than 6 to give a longer cabling life. Either way, the result is a reduction of the load current I_{L} for the same received power and thus reduced I_{L}²R losses in the cabling and/or the option to reduce the cross-sectional area of the cabling conductors thus reducing both its weight and cost.

A disadvantage of a DC power source is that voltage reduction for practical use at the receiving end, by means of transformers, is not possible. Voltage conversion has to be effected by means of electronic converters whose costs, with current technology, are substantially greater than transformers. However with theincrease in use of switching devices such as Integrated Gate Commutated Thyristors (IGCT's) and Insulated Gate Bipolar Transistors (IGBT's) and the continual development of electronic power switching devices generally, the costs are falling with time. At present, the reduced cost of the umbilical and power losses, offset by the increased costs of converters, results in an overall cost reduction when umbilicals of 35km or more are required. In addition, the increased efficiency is attractive to well operators who are under pressure to reduce gaseous emissions resulting from power generation in the business of fluid extraction. It is expected that with future cost reductions of electronic converters the length of the cabling that results in cost benefits will reduce. A further argument for the DC case is that there are, increasingly, requirements for variable frequency AC supplies, typically as a method of speed control of AC electric motors, whose high reliability favours them for the subsea fluid extraction business. Thus electronic inverters are often required whether AC or DC powers the system.

The present invention will now be described, by way of example, with reference to the accompanying drawings, in which:
Fig. 1 is an illustration of one configuration of a system to electrically power a subsea well with power which is high voltage DC (HVDC) through cabling; and
Figs. 2, 3a and 3b illustrate other configurations to electrically power a subsea well with power which is high voltage DC through cabling.

In the different figures, the same reference numerals are used to designate the same items.

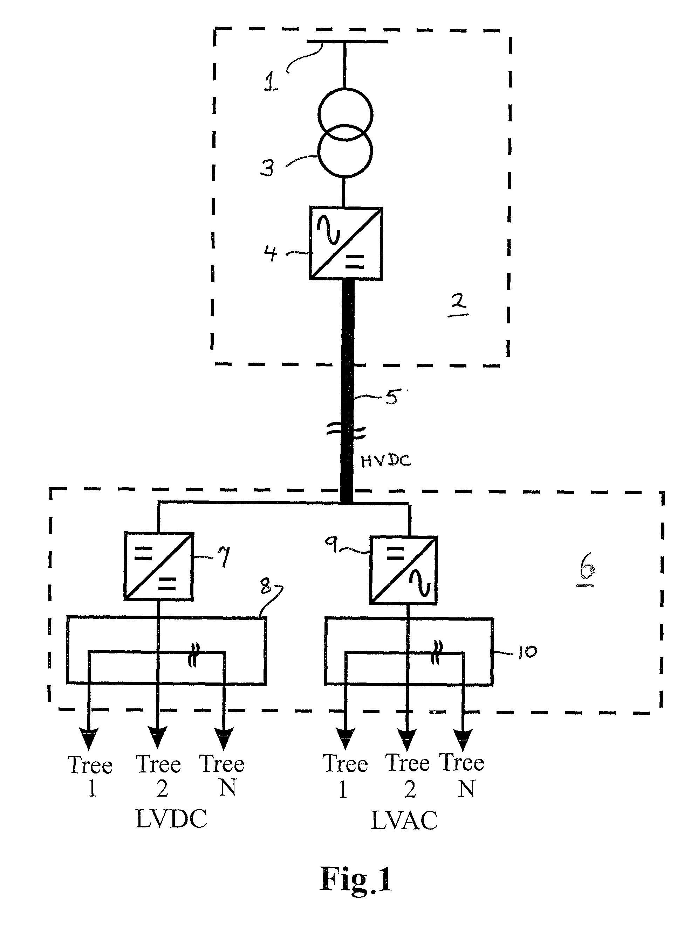

Referring to Fig. 1, a primary power source 1, for a well complex, from a land base or a ship or a fixed or floating platform schematically indicated by reference numeral 2, is generally a three-phase AC supply, typically at 50 or 60 Hz. In most cases, a transformer 3 is required to step up the voltage to the level required for transmission, the output of which is rectified by a rectifier unit 4, to provide high voltage DC for transmission via cabling in the form of an umbilical 5, which typically could be of the order of 200km long.

At the seabed end, the umbilical 5 is connected, usually by wet mateable connectors, to electrical means in the form of a subsea step-down chopper and distribution unit 6. This houses a DC to DC converter 7, to step-down the high transmission voltage to a lower level, i.e. low voltage DC (LVDC), more suited to applications at a "christmas tree" of the well. Such applications are, typically, variable frequency inverters providing supplies to variable speed motors, or direct DC supplies to DC devices such as thermal actuators, solenoid-operated valves and brushless DC motors. The output of the converter 7 feeds a distribution unit 8, to distribute, again usually via wet mateable connectors, the DC supplies to the trees within a field, the number of which will vary according to the number of wells in the field. Thus the outputs shown in Fig. 1 are annotated Tree 1, Tree 2 and Tree N, to depict the variable number that may apply.

The umbilical 5 may also connect to a fixed frequency inverter 9 to provide fixed frequency AC supplies at a voltage level suitable for the tree requirements, i.e. low voltage AC (LVAC). The output of the inverter 9 is also distributed in a similar manner to the LVDC supplies, via a distribution unit 10, to the appropriate number of trees in the field.

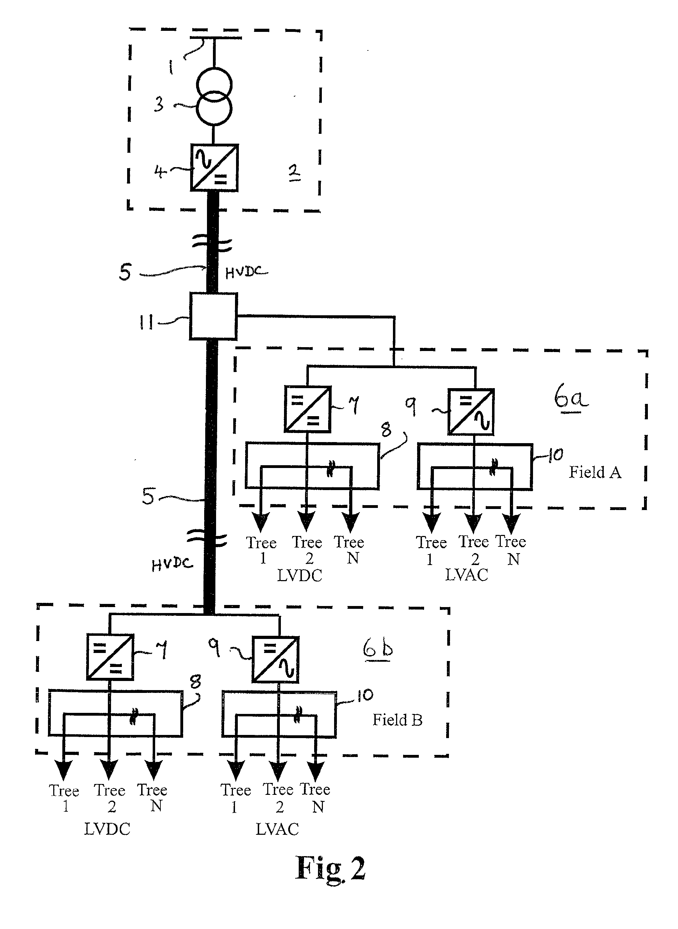

The system of Fig. 1 is typical of that required for a number of trees in a field where the distance between them is relatively small. Fig. 2 illustrates a system where more than one field is supplied with DC power, where the distance away from the power source and between the fields is great enough to justify DC power distribution. In this case, the umbilical 5 is a long umbilical which feeds a subsea, high voltage, distribution unit 11, close to a first field A, with an output to feed the subsea step-down chopper and distribution unit 6a of that field. A second output continues the umbilical 5 to the subsea step-down chopper and distribution unit 6b of a second field B, substantially further away from the platform/ship/land based power source. Further high voltage distribution units may be added to extend the umbilical to further fields.

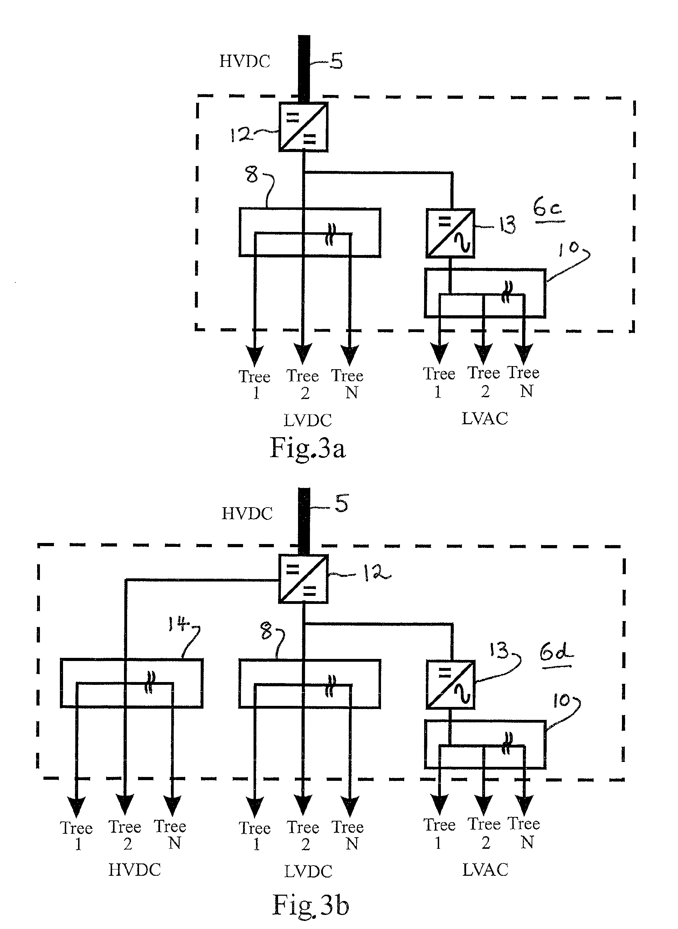

There are other configurations and arrangements of inverters and converters instead of those of Figs. 1 and 2 to provide the required supplies from the high voltage DC supply, at the field end of an umbilical, to the well trees. The chosen configuration will depend on the well requirements at each field. Figs. 3a and 3b show examples by way of illustration.

In Fig. 3a, voltage conversion in a subsea step-down chopper and distribution unit 6c is effected by a DC to DC converter 12 which not only provides the required low voltage DC supplies to the trees, but also provides the power source for a DC to AC inverter 13, for the required fixed frequency AC supplies for the trees. This permits the use of lower voltage devices in the inverter 13, which, dependent on the load requirement, can be more cost effective.

Fig. 3b shows a configuration in which, in a subsea step-down chopper and distribution unit 6d, the high voltage applied to converter 12 is tapped to feed a high voltage distribution unit 14 which distributes a high voltage direct to the trees. This accommodates the operation of actuators directly from high voltage DC supplies. Typically this would include powering heating elements in thermal actuators directly from such high voltages, where insulation can be more easily accommodated than in motors, resulting in a reduction of the load and losses in converters or inverters and thus improving cost effectiveness and reliability.

It should be noted that control and/or switching of the devices attached to the described power system can be effected in the same way as described in detail in UK Patent No. 2 332 220, i.e. the control signals may be carried on the HVDC umbilical or on an optical fibre incorporated in it.

## Claims

1. An underwater hydrocarbon production system comprising:
power supply means at or for use at a remotely located station for providing DC;
electrical means at or for location underwater for using the DC to provide power for an underwater device; and
transmission cabling for transmitting the DC from the power supply means to the electrical means.

2. A system according to claim 2, wherein the power supply means comprises an AC power source and means for converting AC from the power source to DC.

3. A system according to claim 2, wherein the power supply means includes a transformer between the AC power source and the means for converting AC from the power source to DC.

4. A system according to any preceding claim, wherein the electrical means includes means for converting DC from the cabling to lower voltage DC for use as power for an underwater device.

5. A system according to claim 4, further including means for converting such lower voltage DC to AC for use as power for an underwater device.

6. A system according to any preceding claim, wherein the electrical means includes means for converting DC from the cabling to lower voltage AC for use as power for an underwater device.

7. A system according to any preceding claim, wherein the electrical means includes means for deriving unconverted DC from the cabling for use as power for an underwater device.

8. A system according to any preceding claim, wherein the electrical means is adapted for providing power for a plurality of underwater devices.

9. A system according to any preceding claim, wherein there is a plurality of such electrical means at or for use at different underwater locations, the system including means for distributing DC from the cabling to respective ones of the electrical means.
